# EUROPEAN PATENT SPECIFICATION

(11) **EP 0 848 388 B1**
(45) Date of publication and mention of the grant of the patent: **13.02.2002**
(21) Application number: 97402575.1
(22) Date of filing: 30.10.1997
(51) Int. Cl.: H01B 7/28, H01B 9/02

(54) **Screened cable**
Abgeschirmtes Kabel
Câble blindé

(30) Priority: 10.12.1996 NO 965269
(43) Date of publication of application: 17.06.1998
(73) Proprietor: Nexans, 75008 Paris (FR)
(72) Inventor: Bruaset, Are, 7800 Namsos (NO); Ryen, Arve, 7820 Namsos (NO)
(74) Representative: Feray, Valérie

(56) References cited:
- WO-A-95/27290
- CA-A- 2 096 066
- GB-A- 2 225 480
- US-A- 5 006 670

## Description

The present invention relates to cables which are protected against water ingress radially by means of a surrounding metal tape, - and longitudinally by superabsorbant polymer (SAP) powder filled conductors and by water blocking tapes. The invention relates in particular to cables in the voltage range up to 60 kV and comprising a conductor, a conductor screen (inner semiconductive layer), insulation, an insulation screen (outer semiconductive layer), a helical (metal) wire screen, a water blocking layer and outer layers consisting of metal and polymer sheaths.

The screening system of an existing cable construction is as follows:
a) Copper wires over the insulation screen.
b) Two copper wires applied in counter helix around a)
c) Layers of semiconductive nylon tape and water blocking tapes applied interlocked, over b)
d) Aluminium tape applied longitudinally - with sealed overlap - wrapped around c).

A problem that occurs is as follows: The aluminium tape is part of the total cable screen system. The conductivity of the semiconductive nylon tape is much poorer than the conductivity of the aluminium tape and the copper wires, - therefore a certain length of the cable is needed for balancing the currents induced in the aluminium and copper screen components.

If the semiconductive tape is punctured close to the cable end or to a splice, - the total current in the aluminium tape is transferred to the copper screen part through this limited local area of increased conductivity. If this current exceeds the conductive capability of one single copper wire, the wire will be overloaded and breakage may occur. This may cause damage to the insulation system. Such conditions have been unveiled through laboratory tests as well as during ordinary service on cable with higher voltage levels.

With known cables the copper wires and the aluminium tape have been shortcircuited with special equipment installed at the cable ends and splices. Such methods are time consuming and costly. Additional parts are also required.

DE 30 05 875 describes a moisture protected polymer insulated electrical power cable having at least one open layer of water blocking tape arranged upon the outer semiconductor of the cable core. A metal wire screen is arranged over the water blocking tape(s). The purpose of the water blocking tape(s) is to block longitudinal water penetration along the wires of the metal wire screen.

EP 0 601 667 relates to a power cable having a metal wire screen arranged over the outer semiconductive layer of the cable core. Over the metal wire screen there is arranged a counterwound copper strip Over the wire/strip layers there are arranged a water blocking layer in which there is incorporated a copper wire for obtaining electrical contact between an outer metal screen and the metal wire/strip layers.

NO 179305 relates to a power cable having longitudinal as well as radial water proofing. A water blocking tape wound over the outer semiconductive layer of the cable core is covered with a metal wire screen. Between the metal wire screen and an outer screen there are arranged a full layer of water blocking tape as well as longitudinal metal elements.

NO 953449 relates to a power cable having a water blocking layer between a metal wire screen and an outer screen. The water blocking layer is provided with longitudinal metal strips which make contact with the metal wire screen and with the outer screen. A water blocking semiconducting paper tape is also provided between the outer semiconductive layer of the cable core and the metal wire layer. There may also be arranged crossbonded tapes over the metal wire screen.

The object of the present invention is to improve the existing water blocking and screening systems of power cables in the voltage range up to 60 kV. The features of the invention are defined in the claims. The main advantages which have been verified by relevant tests are:
- continuous metal-to-metal contact ensures immediate current distribution between copper wires and aluminium tapes
- improved longitudinal water blocking properties
- considerable cost reductions
- decreased processing time
- less process problems

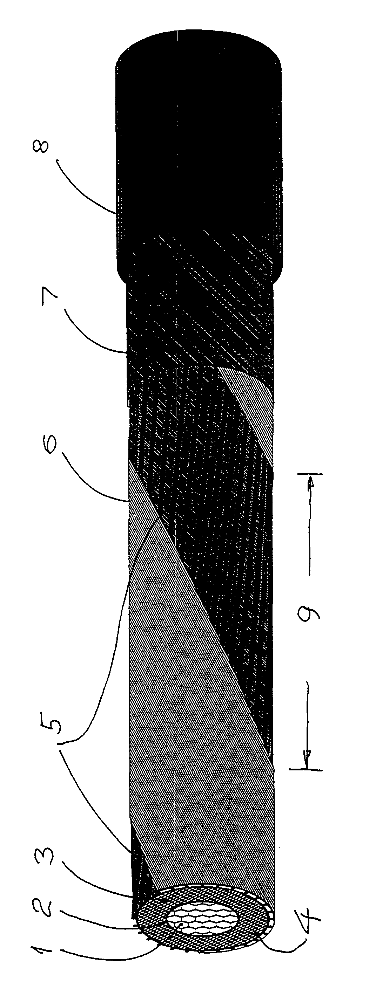

Above mentioned and other features and objects of the present invention will clearly appear from the following detailed description of embodiments of the invention taken in conjunction with the drawing.

The drawing illustrates a 24 kV 150 sq.mm power cable having a conductor 1, a conductor screen 2, insulation 3, an insulation screen 4, a copper wire screen 5, a water blocking tape 6, an outer aluminium tape 7 and an outer PE sheath 8. As is shown the water blocking tape 6 is wound with open turns and the aluminium tape 7 will be in electrical shortcircuiting contact with the individual wires of the wire screen 5 for every turn of the tape. The electrical contacts are obtained and maintained in the space 9 between the side edges of the tape 6.

The space 9 between the side edges of the water blocking tape is determined by the swelling capacity of the tape. The space 9 is adjusted to its maximum while still maintaining the requirements for water blocking.

The water blocking layer 6 consists of an open helix of tape wound counterhelically over the wire screen. The tape may, however, also be wound in the same helical direction as the wire screen provided that the lay length is not the same.

In one embodiment of the invention we have used a water blocking tape of the type having a nonwowen structure with longitudinal strengthening threads or strings on the upper side and with water blocking powder on the lower side. Such tapes may have a thickness of 0.25 mm and a swelling capacity of 13 mm. Very good results were obtained with a tape having a width of 35 mm and a space of 20-30 mm between tape side edges. Tests showed that electrical shortcircuiting contacts were obtained with a side space as narrow as 2 mm.

The desired space between the side edges of the water blocking tape can be obtained by choosing a desired lay length and tape width. The side space should, however, not be greater than what is necessary for obtaining a required longitudinal water blocking. An example of water blocking requirements is that with a water pressure of one meter, water should not be allowed to penetrate longitudinally more than 150 cm along the cable during 10 heatcycles of the conductor - 8 hours heating up to 90 °C and 16 hours cooling to ambient temperature.

In another embodiment of the invention we used a tape having a water penetrable sheet on the lower side of the water blocking powder layer. In a test run with such 35 mm tape we used 10-20 mm side space between turns.

Examples of suitable water blocking tapes are Freudenberg type K3417H and Lantor type 3E5622. If our cables are subjected to water, - the water blocking powder of these tapes will expand and substantially fill all interstices in the wire screen underneath the tape. With a tape side space of 10 mm we can obtain water blocking at 40 cm from the water entrance. This is substantially better than with known cables.

The above detailed description of embodiments of this invention must be taken as examples only and should not be considered as limitations on the scope of protection. The openings in the water blocking layer can be obtained by other means, - without going into details.

## Claims

1. Cable comprising a conductor (1), a conductor screen (2), insulation (3), an insulation screen (4), a helical wire screen (5), a water blocking layer (6) and outer layers consisting of metal (7) and polymer (8) sheaths, **characterized in that**
the metal layer/sheath (7) is arranged directly on the water blocking layer (6) in repeated electrical shortcircuiting contact with the helical wire screen (5) through openings in the water blocking layer (6).

2. Cable according to claim 1, **characterized in that** the helical wire screen (5) is arranged directly on the insulation screen (4) and that the open water blocking layer (6) is arranged directly on the wire screen (5).

3. Cable according to claim 1, **characterized in that** the shortcircuiting contacts are obtained through space (9) between side edges of a helically wound water blocking tape (6).

4. Cable according to claim 1, **characterized in that** the water blocking layer consists of an open helix of tape (6) wound counterhelically over the wire screen.

5. Cable according to claim 3, **characterized in that** the space (9) between the side edges of the water blocking tape is determined by the swelling capacity of the tape.

6. Cable according to claim 3, **characterized in that** the space (9) is adjusted to its maximum while still maintaining the requirements for water blocking.

7. Cable according to claim 3, **characterized in that** the space (9) is at least 5 mm.

8. Cable according to claim 3, **characterized in that** the water blocking tape is of the type having a nonwowen structure with longitudinal strengthening threads or strings on the upper side and with water blocking powder on the lower side.

## Patentansprüche

1. Kabel mit einem Leiter (1), einer Leiterabschirmung (2), Isolierung (3), einer Isolierungsabschirmung (4), einer spiralförmigen Drahtabschirmung (5), einer Wasser-blockierenden Schicht (6) und äußeren Schichten, die aus Metallmänteln (7) und Polymermänteln (8) bestehen, **dadurch gekennzeichnet, daß** die Metallschicht/der Metallmantel (7) direkt unterhalb auf der Wasser-blockierenden Schicht (6) in wiederholtem elektrischen Kontakt mit der spiralförmigen Drahtabschirmung (5) durch Öffnungen in der Wasser-blockierenden Schicht (6) ist.

2. Kabel gemäß Anspruch 1, **dadurch gekennzeichnet, daß** die spiralförmige Drahtabschirmung (5) direkt auf der Isolierungsabschirmung (4) und die offene Wasser-blockierende Schicht (6) direkt auf der Drahtabschirmung (5) angeordnet ist.

3. Kabel gemäß Anspruch 1, **dadurch gekennzeichnet, daß** die kurzschließenden Kontakte durch einen Raum (9) zwischen den Seitenrändern eines spiralförmig gewickelten Wasser-blockierenden Bandes (6) erhalten werden.

4. Kabel gemäß Anspruch 1, **dadurch gekennzeichnet, daß** die Wasser-blockierende Schicht aus einer offenen Helix des gegenläufig spiralförmig über dem Metalldraht gewickelten Bandes (6) besteht.

5. Kabel gemäß Anspruch 3, **dadurch gekennzeichnet, daß** der Raum (9) zwischen den Seitenrändern des Wasser-blockierenden Bandes durch das Quellvermögen des Bandes bestimmt wird.

6. Kabel gemäß Anspruch 3, **dadurch gekennzeichnet, daß** der Raum (9) auf sein Maximum eingestellt ist, während die Anforderungen zur Wasserblockieren dennoch beibehalten werden.

7. Kabel gemäß Anspruch 3, **dadurch gekennzeichnet, daß** der Raum (9) mindestens 5 mm ist.

8. Kabel gemäß Anspruch 3, **dadurch gekennzeichnet, daß** das Wasser-blockierenden Band von der Art ist, das eine nichtgewickelte Struktur mit longitudinalen verstärkenden Fäden oder Saiten auf der oberen Seite und mit Wasser-blockierenden Pulver auf der unteren Seite aufweist.

## Revendications

1. Câble comprenant un conducteur (1), un blindage de conducteur (2), de l'isolant (3), un blindage d'isolant (5), un blindage en fil hélicoïdal (5), une couche imperméable à l'eau (6) et des couches extérieures constituées de gaines métallique (7) et polymère (8),
**caractérisé en ce que**
la couche/gaine métallique (7) est disposée directement sur la couche imperméable à l'eau (6) en contact électrique court-circuitant répété avec le blindage en fil hélicoïdal (5) via des ouvertures dans la couche imperméable à l'eau (6).

2. Câble selon la revendication 1, **caractérisé en ce que** le blindage en fil hélicoïdal (5) est disposé directement sur le blindage d'isolant (4) et **en ce que** la couche imperméable à l'eau ouverte (6) est disposée directement sur le blindage en fil (5).

3. Câble selon la revendication 1, **caractérisé en ce que** les contacts de court-circuitage sont obtenus via l'espacement (9) entre des bords latéraux d'un ruban imperméable à l'eau enroulé en hélice (6).

4. Câble selon la revendication 1, **caractérisé en ce que** la couche imperméable à l'eau est constituée d'une hélice ouverte de ruban (6) enroulée à contre-hélice pardessus le blindage en fil.

5. Câble selon la revendication 3, **caractérisé en ce que** l'espacement (9) entre les bords latéraux du ruban imperméable à l'eau est déterminé par la capacité de gonflement du ruban.

6. Câble selon la revendication 3, **caractérisé en ce que** l'espacement (9) est ajusté à son maximum tout en maintenant les exigences en matière d'imperméabilité vis-à-vis de l'eau.

7. Câble selon la revendication 3, **caractérisé en ce que** l'espacement (9) est d'au moins 5 mm.

8. Câble selon la revendication 3, **caractérisé en ce que** le ruban imperméable à l'eau est du type présentant une structure non tissée dotée de brins ou ficelles de renfort longitudinaux sur le côté supérieur et de poudre imperméable à l'eau sur le côté inférieur.
